# EUROPEAN PATENT APPLICATION

(11) **EP 2 757 460 A2**
(43) Date of publication of application: **23.07.2014**
(21) Application number: 14151717.7
(22) Date of filing: 20.01.2014
(51) Int. Cl.: G06F 3/0488, G06F 3/0481, G06F 3/0482, G09B 21/00

(54) **Method and electronic device for providing guide**

(30) Priority: 18.01.2013 KR 20130005985
(71) Applicant: Samsung Electronics Co., Ltd, Gyeonggi-do 443-742 (KR)
(72) Inventor: Lee, Won-Gi, Gyeonggi-do 443-742 (KR)
(74) Representative: Nederlandsch Octrooibureau

(57) **Abstract**

Provided is a method and apparatus for providing a guide for an icon. An electronic device may designate an icon in response to a first user input and set a guide by associating the designated icon with content to be provided as a guide for the designated icon. The electronic device may display a screen and the designated icon and play the content for the designated icon in response to a second user input on the designated icon.

## Description

### BACKGROUND

### 1. Technical Field

The present disclosure relates generally to a method and electronic device for providing a guide, and more particularly, to a method and electronic device for providing a guide to a user upon receiving a user input.

### 2. Description of the Related Art

User Interface (UI) refers to the technology that provides temporary or continuous access to enable communication between users and things, systems, devices, programs or the like.

Many studies have been conducted on UIs which have been improved to allow users to easily manipulate electronic devices. The improved UIs may allow the users to easily enter data in the electronic devices, or to quickly recognize the outputs of the electronic devices.

As for how to manipulate UIs, applications, electronic devices and the like, user manuals or guides have been provided through printouts or storage media. In the case of the manuals or guides provided through printouts or storage media, users need to inconveniently search the printouts or storage media for the description that fits their situations. Therefore, people such as children, the elderly persons or the disabled persons may not make good use of the manuals or guides. Meanwhile, electronic devices such as mobile terminals may provide the talkback feature which is designed taking the accessibility into consideration, but the unnatural machine pronunciation of the talkback feature may be difficult to hear for the children, the elderly persons or the disabled persons, and may be monotonous.

Therefore, there is a need for a study of the way to provide a manual or guide in an electronic device.

The above information is presented as background information only to assist with an understanding of the present disclosure. No determination has been made, and no assertion is made, as to whether any of the above might be applicable as prior art with regard to the present disclosure.

### SUMMARY OF THE INVENTION

An aspect of the present disclosure is to address at least the above-mentioned problems and/or disadvantages and to provide at least the advantages described below. Accordingly, an aspect of the present disclosure is to provide a guide-providing method and electronic device for allowing a user to easily use a guide.

Another aspect of the present disclosure is to provide a guide-providing method and electronic device for allowing a user to easily set a guide.

Further another aspect of the present disclosure is to provide a guide-providing method and electronic device for allowing a user to efficiently manipulate the electronic device and have an interest in the use of the electronic device.

In accordance with an aspect of the present disclosure, there is provided a method for providing a guide for an icon in an electronic device. The method includes designating an icon in response to a first user input and setting a guide by associating the icon with content to be provided as a guide for the designated icon; displaying a screen including the designated icon for which a guide is set; and playing the content for the designated icon for which a guide is set in response to a second user input to the designated icon.

This provides many advantages. For example, a first user may set a guide in the electronic device, taking a second user into consideration, and the second user using the electronic device may receive a more familiar and proper guide such as a voice of the first user. For example, the second user receiving the guide may include the users who are unfamiliar with manipulations of the electronic device, such as children, the mentally handicapped persons and the elderly persons, while the first user may be a guardian of the second user. The user may manipulate the UI providing a guide according to one aspect so that the content that the user designated for an interest in the use of the electronic device may be provided as a guide. For example, the content to be provided as a guide may include a two-way interaction interface between the electronic device and the user, such as a game application.

According to one aspect, the method may further include, upon receiving a third user input on the designated icon and executing an application corresponding to the designated icon.

According to one aspect, the second user input and the third user input may correspond to different touch gestures.

According to one aspect, a hover gesture on a touch screen may be identified as the second user input, and a touch gesture on the touch screen may be identified as a third user input.

According to one aspect, the playing of the content may include displaying an interaction object for triggering execution of an application corresponding to the designated icon for which a guide is set.

According to one aspect, the method may further include executing the application in response to a third user input to the interaction object.

According to one aspect, the setting of the guide may include displaying a plurality of icons included in at least one of a home screen and a program screen in the guide setting mode; and designating an icon from the plurality of icons in response to the first user input.

According to one aspect, the setting of the guide may include displaying a menu including at least one type of content to be provided as a guide for the designated icon; and associating the designated icon with the content corresponding to the type selected through the menu.

According to one aspect, the setting of the guide may include executing a content creation application for acquiring the content corresponding to the selected type; and acquiring the content through the content creation application in accordance with manipulations input by a user.

According to one aspect, the displaying of the screen may include providing the screen with visual effects indicating that the guide is set for the designated icon.

According to one aspect, the content may include at least one of voice, image, video, or text.

According to one aspect, the playing of the content may include displaying the content in a form of a pop-up in some areas of a screen. According to one aspect, the setting of the guide may include maintaining, in a memory, predetermined associations between at least one icon and content to be provided as a guide for the at least one icon; and changing the predetermined association information depending on a user input.

In accordance with another aspect of the present disclosure, there is provided an electronic device for providing a guide for an icon. The electronic device includes a User Interface (UI) unit for designating an icon in response to a first user input to place the electronic device in a guide setting mode, and displaying a screen and the designated icon; and a controller for setting a guide by associating the designated icon with content to be provided as a guide for the designated icon, and, playing the content associated with the designated icon on the screen in response to a second user input.

According to one aspect, the controller may execute an application corresponding to the designated icon in response to a third user input. According to one aspect, the second user input and the third user input may correspond to different touch gestures.

According to one aspect, the second user input may be associated with a hover gesture on a touch screen, and the third user input may be associated with a touch gesture on the touch screen.

According to one aspect, the controller may display an interaction object for triggering execution of an application corresponding to the designated icon, in response to a second user input. According to one aspect, the controller may execute the application in response to a third user input to the interaction object.

According to one aspect, the UI unit may display a plurality of icons included in at least one of a home screen and a program screen, and designate an icon of the plurality of icons in response to the first user input.

According to one aspect, the UI unit may display a menu including at least one type of content to be provided as a guide for the designated icon; and the controller may set the guide by associating the designated icon with the content corresponding to the type selected through the menu.

According to one aspect, the controller may execute a content creation application for acquiring the content corresponding to the selected type, and acquire the content through the content creation application in accordance with manipulations input by a user. According to one aspect, the UI unit may provide the screen with visual effects indicating that the guide is set for the designated icon.

According to one aspect, the content may include at least one of voice, image, video, or text.

According to one aspect, the UI unit may display the content in a form of a pop-up in some areas of a screen. According to one aspect, the electronic device may further include a memory for maintaining predetermined associations between at least one icon and the content to be provided as a guide for the at least one icon; and the controller may set the guide by changing the predetermined associations in response to user input.

Other aspects, advantages, and salient features of the invention will become apparent to those skilled in the art from the attached claims and from the following detailed description, which, taken in conjunction with the annexed drawings, discloses illustrative embodiments of the invention.

### BRIEF DESCRIPTION OF THE DRAWINGS

The above and other aspects, features and advantages of certain illustrative embodiments of the present disclosure will be more apparent from the following description taken in conjunction with the accompanying drawings, in which:
FIG. 1 illustrates the concept of providing a guide in an electronic device according to one aspect of the present disclosure;
FIG. 2 illustrates an electronic device according to one aspect of the present disclosure;
FIG. 3 is a flowchart illustrating a method of providing a guide according to one aspect of the present disclosure;
FIG. 4 is a flowchart illustrating a method of setting a guide according to one aspect of the present disclosure;
FIG. 5 is a flowchart illustrating a method of providing a guide after guide setting according to one aspect of the present disclosure;
FIG. 6 illustrates a UI used for entering a guide setting mode according to one aspect of the present disclosure;
FIG. 7 illustrates a UI used for designating an icon in accordance with an aspect of the present disclosure;
FIG. 8 illustrates a UI used for designating content to be provided as a guide according to one aspect of the present disclosure;
FIG. 9 illustrates another concept of providing a guide in an electronic device according to one aspect of the present disclosure;
FIG. 10 illustrates further another concept of providing a guide in an electronic device according to one aspect of the present disclosure; and
FIG. 11 illustrates a UI that is provided after a guide is provided, according to one aspect of the present disclosure.

Throughout the drawings, like reference numerals will be understood to refer to like parts, components, and structures.

### DETAILED DESCRIPTION

The aspects, features and advantages of the disclosure will be appreciated when considered with reference to the following description of examples and accompanying figures. The following description does not limit the application; rather, the scope of the application is defined by the appended claims and equivalents. The disclosure includes various specific details to assist in that understanding but these are to be regarded as merely illustrative. Accordingly, those of ordinary skilled in the art will recognize that various changes and modifications of the examples described herein can be made without departing from the scope of the invention. In addition, descriptions of well-known functions and constructions may be omitted for clarity and conciseness. The terms and words used in the following description and claims are not limited to the bibliographical meanings, but, are merely used to enable a clear and consistent understanding of the techniques disclosed herein. Accordingly, as noted above, it should be apparent to those skilled in the art that the following description of examples are provided for illustrative purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Electronic devices in accordance with the examples herein may be implemented in a variety of forms. For example, an electronic device described in this specification may include a mobile terminal, a computer, and various devices that include a User Interface (UI) unit and a controller. The mobile terminal may include, though not limited to, a cellular phone, a smart phone, a laptop computer, a tablet Personal Computer (PC), an electronic Book (e-Book) terminal, a digital broadcasting terminal, a Personal Digital Assistants (PDA), a Portable Multimedia Player (PMP), a navigation terminal and the like.

A guide that is provided in response to a user input to an icon or item according to the examples herein may refer to displaying or playing content. The content provided as a guide may include a file designated depending on the user input, or various types of objects created depending on the user's manipulations. The guide may include description, guide, help and the like, for manipulations or applications of electronic devices. It should be noted that details of the content provided as a guide are not limited to the manipulations of the electronic devices, or the applications corresponding to icons or items, but may be configured in various ways, such as the contents that may cause the user's interests depending on the user's choice, or the contents unrelated to icons or items. The content provided as a guide may be provided by manufacturers of electronic devices or communication service providers, or may be the default content that is provided when applications are downloaded or installed in electronic devices. For the default content, its playback may be deactivated, it may be edited, its association with an icon may be modified, or it may be changed to other content, in electronic devices depending on the user's manipulations through guide setting.

Associations between an icon and content to be provided as a guide for the icon may be stored or maintained in electronic devices. The associations may be newly generated depending on the user input, or at least part of the associations may be modified or changed. Predetermined associations between at least one icon and the content to be provided as a guide for the at least one icon may be stored in electronic devices, or may be maintained in a memory, as the associations are provided by manufacturers of electronic devices or communication service providers, or as applications are installed in electronic devices. For the predetermined associations, at least some of the associations may be modified or changed and activation/deactivation of a guide for each icon may be designated in electronic devices depending on the user input.

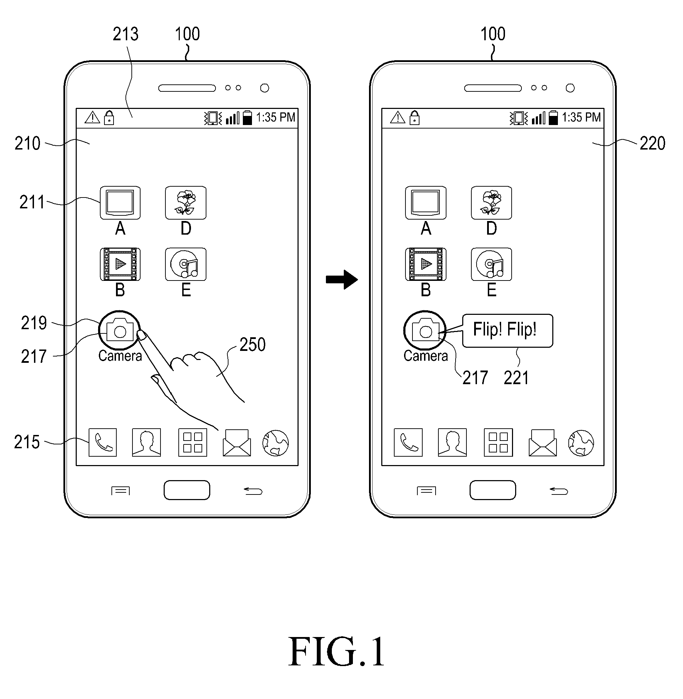

FIG. 1 illustrates the concept of providing a guide in an electronic device according to one aspect of the present disclosure.

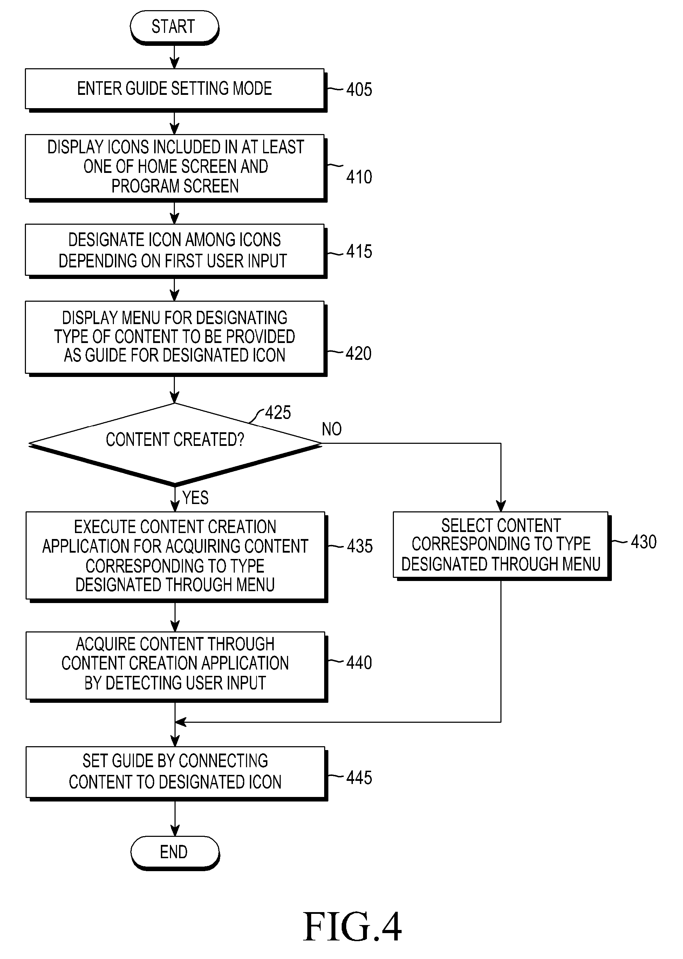

In operation, an electronic device 100 may designate an icon in response to a first user input during a guide setting mode. With "setting a guide" is meant configuring or associating guide content with a UI element or target, such as an icon. The electronic device 100 may set a guide by associating the icon to content to be provided as a guide for the designated icon. The icon may be any one of a plurality of icons included in at least one of a home screen and a program screen of the electronic device 100 such as a mobile terminal. A UI and a guide setting method for the guide setting mode will be described in more detail with reference to FIGs. 4, and 6 to 8.

The targets, for which a guide is provided in response to a user input according to one aspect of the present disclosure, may include not only icons 211, 215 and 217, but also widgets, dock menus at, for example, the bottom of a screen 210, menus in the form of a quick panel or a list, items included in the menus, a status bar 213, items (for example, a battery level indicator, a communication status indicator, a time indicator, and the like) constituting the status bar 213, background images of a home screen or a program screen, and the like. The icons 211, 215 and 217 may be comprised of at least one of an image and a text.

After the guide is set for the designated icon 217, the electronic device 100 may display the screen 210 and the designated icon 217. The electronic device 100 may provide the screen 210 with visual effects 219 indicating that a guide is set for the designated icon 217. In response to a user input 250 to the designated icon 217, the electronic device 100 may also provide auditory effects and tactile feedbacks such as vibrations, which are different from the responses to the icons 211 and 215 for which no guide is set, in order to indicate that a guide is set for the designated icon 217.

Upon receiving the user input 250 to the designated icon 217, the electronic device 100 may play content for the designated icon 217.

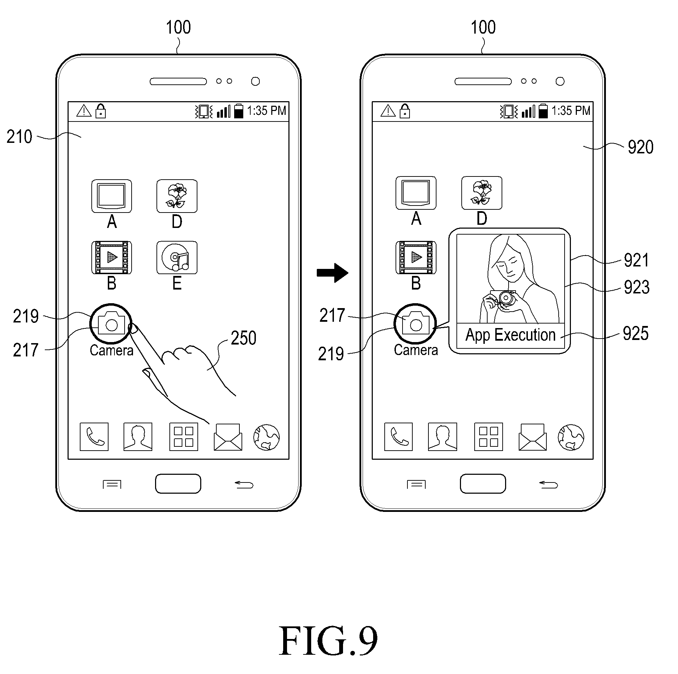

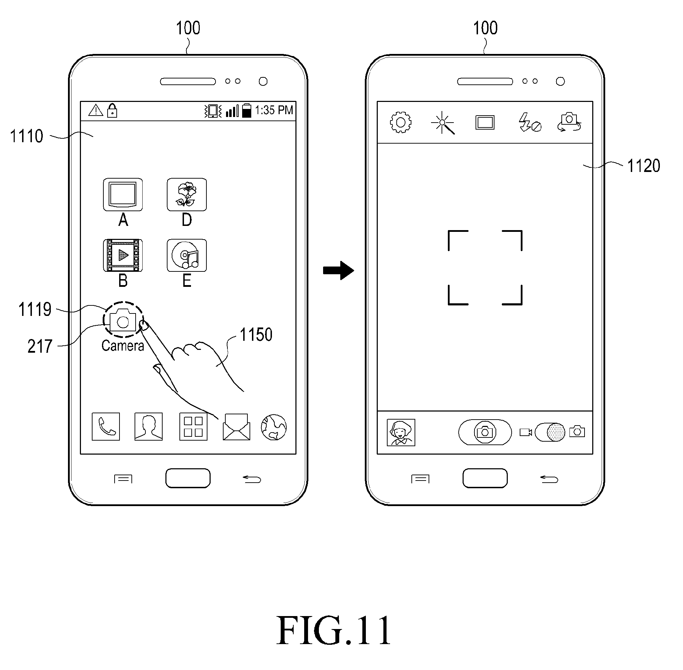

The user input 250 may include a touch gesture, a motion gesture, a button input, a key input, a voice input, a motion input and the like for playing content for the designated icon 217. For convenience of description, the user input 250 will be referred to as a second user input 250 for receiving a guide for an icon, and a user input (for example, selection of an interaction object 925 in FIG. 9, or selection of an icon 217 on a screen 1110 in FIG. 11) for executing an application corresponding to an icon, or a new user input after the second user input will be referred to as a third user input.

The second user input 250 and the third user input may correspond to the same gestures such as the same touch gestures. In a case where the second user input 250 and the third user input correspond to the same gestures, the electronic device 100 may control a UI such that if the same gestures for the designated icon 217 are sequentially input for distinguishing of different user inputs to one icon 217, they may serve as different inputs for executing different functions, in the time axis.

The electronic device 100 may separately set and identify gestures (for example, different touch gestures) for the second user input 250 and the third user input, and distinguish between the second user input 250 and the third user input depending on the input type regardless of the input time. The electronic device 100 may provide the guide set for the designated icon 217 or execute an application corresponding to the designated icon 217 depending on the distinguishable user input.

The content may be the content that was set in response to the first user input, or the content that was acquired using a content creation application in the electronic device 100 depending on manipulations input by a user. The content may be a file in the form of at least one of voice, image, video, or text (i.e., note). Further, the content may be a File Transfer Protocol (FTP) or Internet web page, or a network address such as an Internet Protocol (IP) address. If the content is played, a web page indicated by the network address may be displayed, or at least one of voice, image, video, text and the like may be played or displayed.

For example, on a screen 220 in FIG. 1 may be played the content for the designated icon 217 for which a guide is set, in response to reception of the user input 250 to the designated icon 217. The electronic device 100 may display or play the content in the form of a pop-up 221 in some areas of the screen 220 including the designated icon 217. The content may be displayed not only in the form of the pop-up 221, but also on the background screen, in the window area, or on the entire area of the screen 220. The pop-up 221 or the window may have a variety of shapes such as rectangle, circle, oval, speech bubble, and cloud. In addition, auditory content such as voice, or tactile content such as haptic may be played without separate visual effects.

The content that is played in the pop-up 221 on the screen 220 may be a description (or a guide) of an application corresponding to the designated icon 217, or may be the contents allowing the user to have an interest in the designated icon 217. For example, if the designated icon 217 corresponds to a camera application, the user's voice (or an audio file) "Flip! Flip!", and the text (or a text file) "Flip! Flip!" that is displayed in the form of the pop-up 212 may be associated with the designated icon 217 as a guide for designated icon 217. The user may select at least one type of content as a guide for the designated icon 217 by manipulating the UI of the electronic device 100. According to one aspect of the present disclosure, a first user may set a guide in the electronic device 100, taking a second user into consideration, and the second user using the electronic device 100 may receive a more familiar and proper guide such as a voice of the first user. For example, the second user receiving the guide may include the users who are unfamiliar with manipulations of the electronic device 100, such as children, the mentally handicapped persons and the elderly persons, while the first user may be a guardian of the second user. The user may manipulate the UI providing a guide according to one aspect so that the content that the user designated for an interest in the use of the electronic device 100 may be provided as a guide. For example, the content to be provided as a guide may include a two-way interaction interface between the electronic device 100 and the user, such as a game application. If a plurality of content types are designated for one icon as a guide, the electronic device 100 may arbitrarily select and play at least one of the plurality of content types so that a guide for an icon may be changed every time the screen and the designated icon is changed.

Upon receiving the third user input, the electronic device 100 may execute an application corresponding to the designated icon 217. For example, if the designated icon 217 corresponds to a camera application, the electronic device 100 may execute the camera application upon receiving the third user input. In this manner, without a significant modification in the existing UI in which a guide for an icon is not set, the electronic device 100 may easily and effectively provide the function of providing a guide for an icon and the function of executing an application corresponding to the icon.

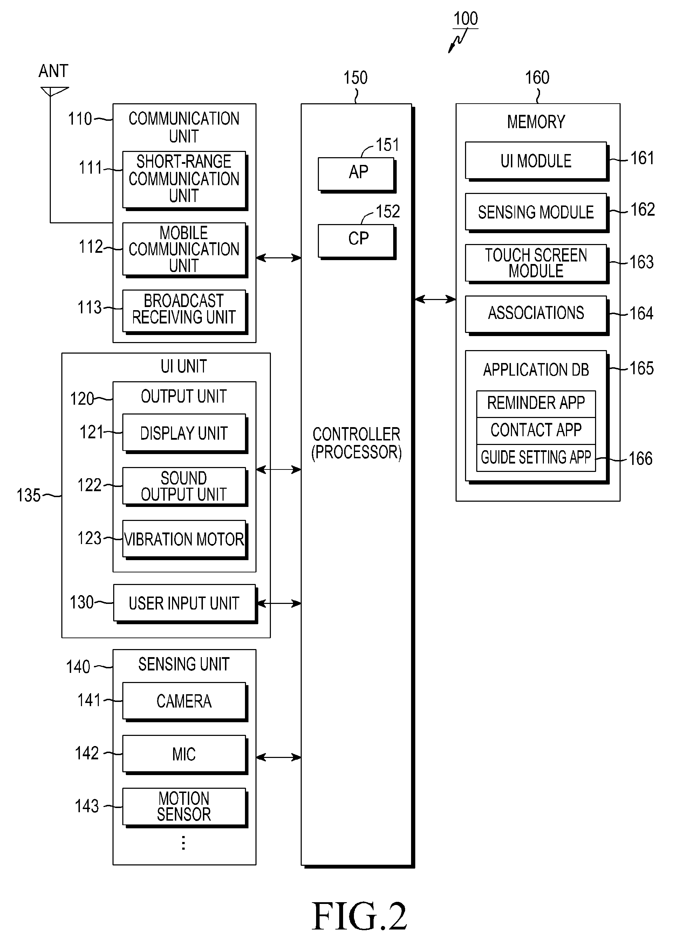

A method and apparatus for providing a guide will be described in more detail below with reference to FIGs. 2 to 11.

FIG. 2 illustrates an electronic device according to one aspect of the present disclosure.

Referring to FIG. 2, an electronic device 100 may include a UI unit 135 and a controller (or processor) 150. The UI unit 135 may include an output unit 120 and a user input unit 130. The electronic device 100 may further include a memory 160. In addition, the electronic device 100 may further include a communication unit 110 or a sensing unit 140.

The UI unit 135 may designate an icon in response to the first user input so as to place the electronic device in a guide setting mode. The UI unit 135 may provide the user with a UI for guide setting. The UI unit 135 may display a screen and the designated icon.

The UI unit 135 may include the output unit 120 and the user input unit 130. The output unit 120, which is configured to output audio signals, video signals or vibration signals, may include a display unit 121, a sound output unit 122 and a vibration motor 123. The display unit 121 may output information that is processed in the electronic device 100. For example, in a call mode, the display unit 121 may display a call-related User Interface (UI) or Graphic User Interface (GUI). The display unit 121 may display a UI for setting the guide.

If the display unit 121 and a touchpad (not shown) constitute a touch screen that is formed in a layered structure, the touch screen may be used as a device that serves not only as the output unit 120, but also as the user input unit 130. The display unit 121 may include at least one of Liquid Crystal Display (LCD), Thin Film Transistor-Liquid Crystal Display (TFT-LCD), Organic Light-Emitting Diode (OLED), flexible display, 3-Dimensional (3D) display, electrophoretic display, and the like. Depending on the implementation type of the electronic device 100, the electronic device 100 may include two or more display units 121. The two or more display units 121 may be mounted to face each other, using a hinge or the like.

The sound output unit 122 may output audio data that is received from the communication unit 110 or stored in the memory 160. The sound output unit 122 may output sound signals of content, for playback of the content provided as a guide. The sound output unit 122 may output sound signals (for example, an incoming call alert tone, an incoming message alert tone and the like) related to the functions performed in the electronic device 100. The sound output unit 122 may include a speaker (SPK), a buzzer and the like.

The vibration motor 123 may output vibration signals. The vibration motor 123 output vibration signals as tactile feedbacks, upon receiving a user input to a designated icon for which a guide is set. The vibration motor 123 may output vibration signals corresponding to the outputs of audio data or video data. The vibration motor 123 may output vibration signals, if the touch screen is touched. To provide haptic effects such as vibration signals as tactile feedbacks, Electro Active Polymer (EAP), piezoelectric elements or the like may be used together with or in place of the vibration motor 123.

The user input unit 130 may receive a user input for designating an icon and setting a guide for the designated icon. The user input unit 130 may designate an icon, or content to be provided as a guide, depending on the user input received thereon.

The user input unit 130 refers to a means by which the user may enter data for controlling the electronic device 100. For example, the user input unit 130 may include, though not limited to, buttons (which may be implemented by a software module, or a physical mechanism and circuit), keypad, dome switches, touchpad (for example, capacitive touchpad, electromagnetic induction touchpad, resistive touchpad, infrared touchpad, surface ultrasound conductive touchpad, integral tension measurement touchpad, piezoelectric effect touchpad, and the like), jog wheel, jog switches, and the like. As described above, the display unit 121 and the touchpad may constitute a touch screen by being combined. If the touch screen is configured to include a capacitive touchpad or an electromagnetic induction touchpad, the touch screen may receive user inputs through accessories such as a capacitive pen or an electromagnetic induction pen.

The second user input for receiving a guide and the third user input for executing an application corresponding to an icon may correspond to the same gestures. For example, in a case where a touch gesture is entered through a touch screen, the second user input and the third user input may correspond to tap gestures meaning selection of one icon. In a case where a user input is received with a mouse, the second user input and the third user input may correspond to actions of clicking one icon using the same button. In a case where a user input is received with keys or buttons, the second user input and the third user input meaning activation or selection of one icon may correspond to input signals generated by pressing the same key or button. In addition, the second user input and the third user input may be set to correspond to various types of gestures or input signals. In the case where the second user input and the third user input correspond to the same gestures, if the same gestures are entered at different times for distinguishing different user inputs to one icon, the electronic device 100 may change a UI at the time each gesture is entered, so that the gestures may be treated as different inputs for executing different functions. The UIs displayed at the times the second user input and the third user input are received, or the screens on which the UIs are displayed, may be different from each other. For example, in the screen 210 in FIG. 9, the second user input 250 may correspond to a tap gesture on the designated icon 217, and may be an input for receiving a guide. In the screen 1110 in FIG. 11, the third user input 1150 may also correspond to a tap gesture on the designated icon 217, but it may be an input for executing an application corresponding to the designated icon 217. The screen 210 in FIG. 9 may be a home screen that is displayed before a guide is provided, while the screen 1110 in FIG. 11 may be a home screen that is displayed after a guide is provided. For distinguishing of different UIs, the electronic device 100 may provide visual effects for the designated icon 217 such that visual effects 219 in the screen 210 may be different from visual effects 1119 in the screen 1110, or may provide a UI which is different in type from the second user input in the time axis, using the interaction object 925 for the third user input.

The second user input and the third user input according to another aspect of the present disclosure may correspond to different gestures. For example, the second user input for receiving a guide in the electronic device 100 may correspond to a hover gesture on a touch screen, which may be entered using a fingertip or a pen, and the third user input for executing an application corresponding to an icon may correspond to a touch gesture on the touch screen. The hover gesture may be a gesture that is detected when the distance between the touch screen of the electronic device 100 and the fingertip (or pen) falls within a preset range. The touch gesture may be a gesture that is detected when the distance between the touch screen and the fingertip (or pen) is shorter than that of the hover gesture. The second user input may be a tap gesture, and the third user input may be a double tap gesture. The second user input may be a long press gesture, and the third user input may be a tap gesture. In addition to these examples, it should be noted that the second user input and the third user input may be set as various types of gestures or input signals. The electronic device 100 may provide a guide set for an icon or execute an application corresponding to the icon, depending on the distinguishable user input.

For identification of gestures or input signals, data (or reference values) of preset gestures may be stored in the memory 160. Specifically, the data of preset gestures may be included in a UI module 161 of the memory 160. The controller 150 may access the data of preset gestures from the memory 160, and compare a gesture entered through the UI unit 135 or a user input for an input signal, with the data of preset gestures. Depending on the comparison results, the controller 150 may distinguish or identify the user input as a gesture corresponding to the second user input for a function of providing a guide or to the third user input for a function of executing an application corresponding to an icon. The controller 150 may execute the function corresponding to the second user input or the third user input depending on the UI provided when the input is received, and the identified gesture.

The controller 150 may set a guide by associating the icon that was designated by the UI unit 135 in the guide setting mode, to the content to be provided as a guide for the designated icon. The controller 150 may store information about the association or mapping relationship between the designated icon and the content to be provided as a guide, in the memory 160 as associations 164. The associations 164 may include information about the icon and information about the content corresponding to the icon. For example, the information about the icon and the information about the content may be stored in the form of a mapping table. The information about the icon or the information about the content may be an identifier, a storage location, or an address of its object, or may be the icon or content file itself. The memory 160 may maintain predefined associations between at least one icon and content to be provided as a guide for the at least one icon, as the associations are provided by the manufacturer of the electronic device 100 or the communication service provider, or as applications are installed in the electronic device 100. For the predefined associations, at least some of the associations may be modified or changed and activation/deactivation of a guide for each icon may be designated, in the electronic device 100 depending on the user input.

Upon receiving the second user input to a designated icon for which a guide is set the controller 150 may play content for the designated icon. By identifying the gesture or input signal which is a user input received from the UI unit 135, the controller 150 may determine whether the user input is a user input for a function of providing a guide for the icon or a user input for a function of executing an application corresponding to the icon. The controller 150 may distinguish the type of the function for a user input, taking into account the UI that is provided when the user input is received. In other words, in a case where UIs handling different functions in the time axis are provided for user inputs based on the same gestures, such as, for example, the second user input 250 of FIG. 9 and the third user input 1150 of FIG. 11, the controller 150 may detect the response or the function of the UI, which is provided when a user input is received.

If the gesture or the input signal is determined as the second user input for a function of providing a guide, the controller 150 may play content for the icon. The content may include at least one of voice, image, video, or text. A plurality of content may be played together as a guide.

Upon receiving the third user input to a designated icon for which a guide is set, the controller 150 may execute an application corresponding to the designated icon. The controller 150 may execute the application corresponding to the icon, if the user input received from the UI unit 135 is determined as the third user input for a function of executing an application corresponding to the icon.

The controller 150 may generally control the overall operation of the electronic device 100. The controller 150 may control the overall operation of the communication unit 110, the UI unit 135, the sensing unit 140 and the memory 160, by executing the programs stored in the memory 160.

The controller 150 may include an Application Processor (AP) 151 and a Communication Processor (CP) 152. The AP 151 may control execution of various applications stored in the memory 160. For example, the AP 151 may control the UI unit 135 in the guide setting mode by loading a guide setting application 166 stored in the memory 160, and store the associations 164 in the memory 160 by associating the designated icon with the content. Upon receiving a user input to the icon, the AP 151 may determine whether a guide is set for the icon, or content is associated with the icon, based on the associations 164 stored in the memory 160.

The memory 160 may store the UI module 161, a sensing module 162, a touch screen module 163, the associations 164, and an application Database (DB) 165. The application DB 165 may include a content creation application (not shown) for acquiring content by detecting a user input, and the guide setting application 166.

The memory 160 may store a program or commands for processing and control of the controller 150, and store input/output data.

The memory 160 may include at least one of a flash memory-type memory, a hard disk-type memory, a multimedia card micro-type memory, a card-type memory (for example, SD or XD memory and the like), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and the like. The electronic device 100 may operate the web storage that performs a storage function of the memory 160 on the Internet.

The programs stored in the memory 160 may include a plurality of modules depending on their functions, and may include, for example, the UI module 161, the sensing module 162, the touch screen module 163, and the like.

The UI module 161 may store data of preset gestures. The UI module 161 may be control information or command set needed for driving of the UI unit 135. The function of the UI module 161 may be known to those skilled in the art from its name, so its detailed description will be omitted. The controller 150 may provide a UI used for setting a guide for the user through the UI unit 135 in the guide setting mode by accessing the UI module 161 and the guide setting application 166 in the application DB 165.

The sensing module 162 may be a command set by which the controller 150 may control the sensing unit 140. The controller 150 may control the sensing unit 140 by loading the content creation application (not shown) and the sensing module 162 from the memory 160 so that content to be provided as a guide may be acquired. The content creation application may include a variety of applications such as a voice recorder application, a camera application, a camcorder application, a text application, a pen-based note application and the like, depending on the type of the acquired content.

If the UI unit 135 includes a touch screen, the touch screen module 163 may detect the user's touch gesture on the touch screen, and transfer information about the touch gesture to the controller 150. The touch screen module 163 may be configured as a separate hardware (H/W) controller.

The sensing unit 140 may include a variety of sensors which are included inside or near the touch screen to detect a contact touch or a proximity (or non-contact) touch on the touch screen. There is a tactile sensor as an example of a sensor for detecting a touch on the touch screen. The tactile sensor refers to a sensor for detecting contact (that a person can feel) with a specific object. The tactile sensor may detect a wide range of information such as the roughness of the contact surface, the rigidity of the contact object, and the temperature of the contact point.

There is a proximity sensor as an example of a sensor for detecting a touch on the touch screen. The proximity sensor refers to a sensor for detecting the presence/absence of an object that approaches or exists near a specific detection surface, without mechanical contact, using the strength of the electromagnetic field or the infrared. Examples of the proximity sensor may include a through-beam photoelectric sensor, a diffusion-reflection photoelectric sensor, a retro-reflective photoelectric sensor, a highfrequency oscillation proximity sensor, a capacitive proximity sensor, a magnetic proximity sensor, an infrared proximity sensor, and the like. The user's touch gesture may include tap, long press (or touch & hold), double tap, drag, panning, flick, drag & drop, swipe, and the like.

The memory 160 may include the guide setting application 166 for providing a UI in the guide setting mode. The memory 160 may store a variety of applications. For example, the application DB 165 may have, though not limited to, reminder applications, contact applications, map applications, music applications, E-book applications, health care applications, exercise management applications, childcare applications, and the like.

The memory 160 may include a speech recognition module (not shown) for recognizing the user's speech using a speech recognition engine, and transferring the recognized speech to the controller 150.

The memory 160 may include an alarm module (not shown) having a function of generating signals for notifying the occurrence of an event in the electronic device 100. Examples of the event occurring in the electronic device 100 may include a call signal receiving event, a message receiving event, a key signal entering event, a schedule notifying event, and the like. The alarm module may output an alarm signal in the form of a video signal through the display unit 121, output an alarm signal in the form of an audio signal through the sound output unit 122, and output an alarm signal in the form of a vibration signal through the vibration motor 123. The alarm module may provide a snooze function. For example, if the user sets the alarm repeat count (for example, 5 times) or the alarm repeat interval (for example, 3 minutes), the alarm module may output an alarm signal a predetermined number of times (for example, 5 times) or at predetermined intervals (for example, 3 minutes).

The memory 160 may include the associations 164 indicating a mapping table in which information about an icon is associated with information about content to be provided as a guide for the icon. The content may be the content that is designated depending on the user input, or the content that is acquired using a content creation application in the electronic device 100 depending on the user's manipulations. For user's convenience, the associations 164 may include the manufacturer of the electronic device 100, the application developer, or the default associations provided by the third user. In the guide setting mode, the default associations may be changed or its activation/deactivation may be determined. The controller 150 may acquire content from the sensing information that is input depending on the user's manipulations, by driving the content creation application and controlling the sensing unit 140. The acquired content may be stored and maintained in the memory 160. The content that is designated depending on the user input when the guide is set may be the content that is acquired through the content creation application, the content that is downloaded over the communication network or through the external storage device, or the content that is stored in advance when the electronic device 100 is manufactured.

The communication unit 110 may include one or more components for communication between the electronic device 100 and a mobile communication base station, a server, or an external device. For example, the communication unit 110 may include a short-range communication unit 111, a mobile communication unit 112, a broadcast receiving unit 113, and the like.

The short-range communication unit 111 may include a communication module based on short-range communication technology such as Bluetooth, Wireless Local Area Network (WLAN), Wireless Fidelity (Wi-Fi), Zigbee, Wi-Fi Direct (WFD), Ultra Wideband (UWB), Infrared Data Association (IrDA), Radio Frequency Identification (RF-ID), Near Field Communication (NFC), and the like.

The short-range communication unit 111 may receive signals (or advertising packet) broadcasted from the external device. The short-range communication unit 111 may scan (or search for) external devices at regular intervals, or at the user's request. The short-range communication unit 111 may form a communication channel by paring with the scanned external device, or entering the network using the external device.

The mobile communication unit 112 may transmit and receive wireless signals to/from at least one of a base station, an external terminal, and a server in the mobile communication network. The wireless signals may include voice call signals, video call signals, or various types of data, which are determined depending on transmission/reception of text/multimedia messages. The mobile communication unit 112 may include a communication module based on the standard such as Time Division Multiplexing (TDM), Time Division Multiple Access (TDMA), Frequency Division Multiplexing (FDM), Frequency Division Multiple Access (FDMA), Code Division Multiplexing (CDM), Code Division Multiple Access (CDMA), Orthogonal Frequency Division Multiplexing (OFDM), Orthogonal Frequency Division Multiple Access (OFDMA), Multiple Input Multiple Output (MIMO), Global System for Mobile communication (GSM), Wideband Code Division Multiple Access (WCDMA), High Speed Downlink Packet Access (HSDPA), Long Term Evolution (LTE), Worldwide Interoperability for Microwave Access (WiMAX) and the like.

The communication module may include an antenna, a Radio Frequency (RF) circuit, a modulator/demodulator (modem) and the like, and may be configured by hardware or software. Some function modules of the modem may operate together with the CP 152 in the controller 150, or may operate alone without the CP 152.

The broadcast receiving unit 113 may receive broadcast signals and/or broadcast-related information from the outside over broadcast channels. The broadcast channels may include satellite channels and terrestrial channels. Depending on the implementation of the electronic device 100, the broadcast receiving unit 113 may be omitted.

The sensing unit 140 may include a camera 141, a microphone (MIC) 142, a motion sensor 143, and the like. The sensing unit 140 may detect user inputs, voices, sounds, images, videos, or movements of the electronic device 100. The user inputs may include the second user input for playing content for an icon for which a guide is set, and the third user input for executing an application corresponding to the icon. The user inputs may include touch gestures, motion gestures, button input, key input, voice input, motion input, and the like. The sensing unit 140 may detect motion gestures, voice input, motion input, and the like.

The sensing unit 140 may obtain sensing information corresponding to various content creation applications under control of the controller 150. The controller 150 may control the sensing unit 140 by loading the content creation application and the sensing module 162 from the memory 160.

The camera 141 may obtain sensing information for user inputs by capturing user's motion gestures. When intending to create image or video content, the camera 141 may obtain sensing information corresponding to a camera application or a camcorder application.

The camera 141 may include a 2-Dimensional (2D) or 3D optical sensor, a 3D depth sensor and the like. The camera 141 may be mounted on at least one side of the electronic device 100 having the display unit 121. The camera 141 may obtain image/video frames for still images or videos through an image sensor in the video call mode or the shooting mode. The images captured by the image sensor may be processed in the controller 150 or a separate image processor (not shown). The processed image frames may be displayed on the display unit 121, stored in the memory 160, or transmitted to the outside through the communication unit 110. The electronic device 100 may have two or more cameras 141 depending on its configuration mode.

The microphone 142 may obtain sensing information for user's voice inputs. When intending to create voice content, the microphone 142 may obtain sensing information corresponding to a voice recorder application.

The microphone 142 may receive audio signals from the outside and process them in electrical voice data, in the call mode, the recording mode or the voice recognition mode. In the case of the call mode, the processed voice data may be converted into radio signals that can be transmitted to the mobile communication base station by the mobile communication unit 112.

The motion sensor 143 may obtain sensing information for the user's motion inputs of panning (or moving) or shaking the electronic device 100. The motion sensor 143 may obtain sensing information for motion patterns by detecting motions of the electronic device 100. The motion sensor 143 may include an acceleration sensor, a geomagnetic sensor, a gyro sensor, and the like. The motion sensor 143 may detect sensing information such as information about the moving direction and strength of the electronic device 100 for a predetermined time, and obtain the motion patterns such as the motion's trajectory or the accumulated data of motion vectors, from the detected sensing information. Based on the obtained sensing information, the controller 150 may determine whether the motion pattern of the electronic device 100 meets a preset motion pattern corresponding to an input or command, or falls within a motion range corresponding to the preset motion pattern.

It will be apparent to those of ordinary skill in the art that sensors in the sensing unit 140 may be configured in various ways depending on the user's input patterns, or the types of content creation applications.

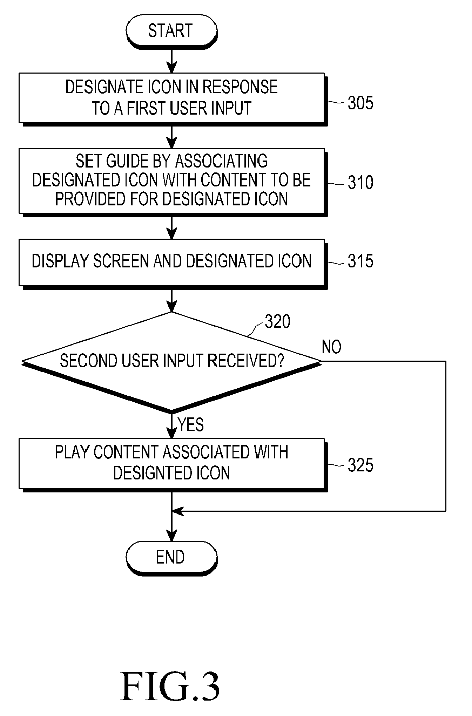

FIG. 3 is a flowchart illustrating a method of providing a guide according to one aspect of the present disclosure. A method for providing a guide in the electronic device 100 of FIG. 2 will be described below by way of example.

In block 305, the electronic device 100 may designate an icon in response to a first user input.

In block 310, the electronic device 100 may set a guide by associating content to be provided as a guide with the icon designated in block 305. The content may be the content that is acquired using a content creation application in the electronic device 100 depending on the user's manipulations. The content may include at least one of voice, image, video, or text. Further, the content may be an FTP or Internet web page, or a network address such as an IP address. If the content is played, a web page indicated by the network address may be displayed, or at least one of voice, image, video, text and the like may be played or displayed. The content provided as a guide may be provided by the manufacturer of the electronic device 100, or may be the default content that is provided when applications are downloaded or installed in the electronic device 100. Predetermined associations between at least one icon and content to be provided as a guide for the at least one icon may be maintained in the memory 160 of the electronic device, as the associations are provided by the manufacturer of the electronic device 100 or the communication service provider, or as applications are installed in the electronic device 100. For the predetermined associations, activation/deactivation of a guide associated with each icon may be designated, or at least some of the associations may be modified or changed, in the electronic device 100 depending on the user's manipulations (or depending on the user inputs) through guide setting.

In block 315, the electronic device 100 may display a screen and the designated icon for which a guide is set.

In block 320, the electronic device 100 may determine whether a second user input to the designated icon is received. If the second user input to the designated icon is not received, the electronic device 100 may end the operation of providing a guide for an icon.

Upon receiving the second user input to the designated icon, the electronic device 100 may play content associated with the designated icon, in block 325.

In block 325, the electronic device 100 may display an interaction object for triggering execution of an application corresponding to the designated icon. Upon receiving a third user input to the interaction object, the electronic device 100 may execute the application corresponding to the designated icon.

Otherwise, upon receiving a third user input to the designated icon, the electronic device 100 may execute an application associated with the designated icon.

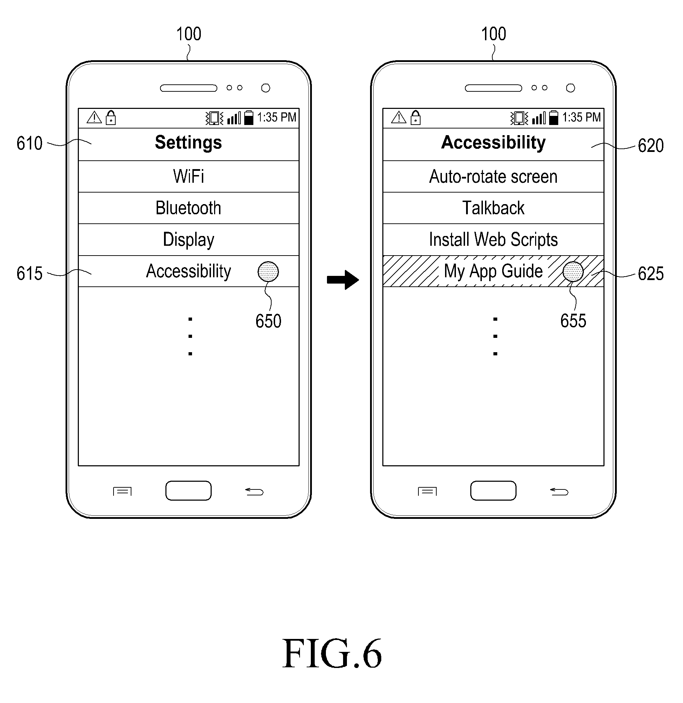

FIG. 4 is a flowchart illustrating a method of setting a guide according to one aspect of the present disclosure. FIG. 4 showing a detailed description of blocks 305 to 310 in FIG. 3 will be described below with reference to FIGs. 6 to 8.

In block 405, the electronic device 100 may enter the guide setting mode.

In FIG. 6, screens 610 and 620 of the electronic device 100 represent an example of a UI used for entering the guide setting mode. The screen 610 represents a settings menu (or a preferences menu) of the electronic device 100. The settings menu may provide a UI for setting communication such as WiFi and Bluetooth, setting display, and setting accessibility 615. If the accessibility 615 is selected depending on a user input 650, the electronic device 100 may display the screen 620 displaying an accessibility setting menu.

The accessibility setting menu may include a guide setting item 655 for providing guide setting according to one aspect of the present disclosure. The accessibility setting menu may also include items such as Auto-Rotate Screen, Talkback, Install Web Scripts and the like. The Auto-Rotate Screen item represents a function of adaptively changing the orientation (landscape or portrait) of the screen displayed on the electronic device 100 depending on whether the user holds the electronic device 100 horizontally or vertically. The Talkback item represents a function in which the electronic device 100 explains in voice the items touched, selected or activated by the user, and may include voice feedback for the visually impaired. The Install Web Scripts item represents a function of installing scripts to facilitate access to web content. If the guide setting item 655 is selected depending on the user input, the electronic device 100 may enter the guide setting mode.

As for how the electronic device 100 enters the guide setting mode, there are various possible methods in addition to the method of entering the guide setting mode using the UI illustrated in FIG. 6. For example, upon receiving a preset user input (for example, touch gesture, motion gesture, button input, key input, voice input, motion input and the like) in the home screen or the program screen, the electronic device 100 may transition from the normal use mode to the guide setting mode. The electronic device 100 may provide a function capable of entering the guide setting mode using an add-ons menu for icons in the home screen or the program screen.

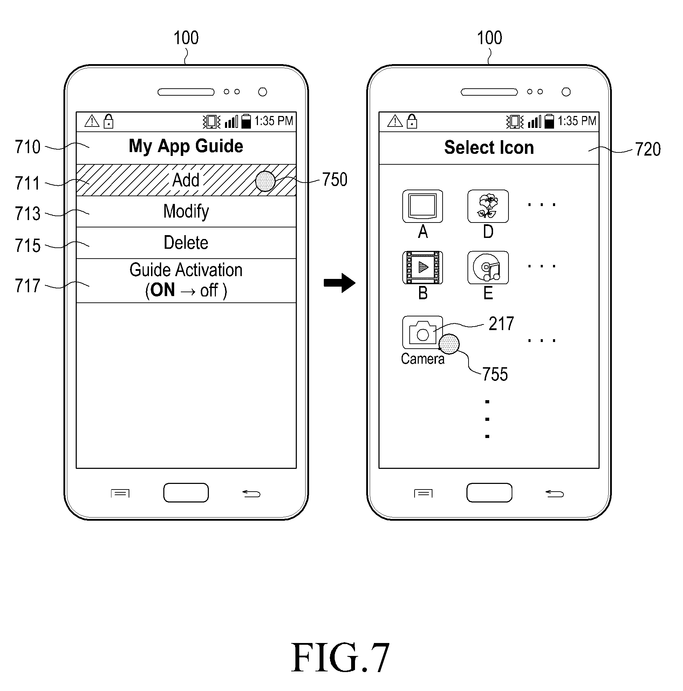

A screen 710 in FIG. 7 may be an example of displaying a guide setting menu in the guide setting mode. The guide setting menu may include an Add item 711, a Modify item 713, a Delete item 715, a Guide Activation item 717, and the like. The Add item 711 may be a UI for a function of adding, to the association data, information about an icon or information about content to be provided as a guide for the icon so that a guide may be provided for a new icon. The Modify item 713, which is provided to modify the associations maintained in memory, may correspond to a function of modifying the information about an icon and the information about the content corresponding to the icon. The Delete item 715 may be used to delete at least some of the associations maintained in the memory. The Guide Activation item 717 may be a UI for indicating activation/deactivation of the guide providing function according to one aspect of the present disclosure, or for making it possible to determine whether the guide providing function is activated or not. For example, the Guide Activation item 717 may indicate that the guide providing function is presently activated, and may select any one of the activation and the deactivation depending on the user input to the guide activation item 717. The guide activation item 717 may be provided in the form of a toggle button as shown in the screen 710, or may be implemented in various ways, such as in the form of a radio button, a check box, a list and the like.

The associations may be modified or changed or its activation/deactivation may be designated through the items 711, 713, 715 and 717 of the guide setting menu depending on the user's manipulations.

In block 410, the electronic device 100 may display icons included in at least one of the home screen and the program screen. A screen 720 in FIG. 7 may be a screen that is displayed if the Add item 711 on the screen 710 is selected depending on the user input 750. The screen 720 may be used to modify or delete the guide for the icon. The screen 720 may be made up of a plurality of icons included in at least one of the main screen and the program screen. For example, for user's convenience, the screen 720 may be configured to be the same as the home screen or the program screen in the normal use mode. The screen 720 may have a form in which icons are arranged according to a specific sort rule.

In block 415, the electronic device 100 may designate an icon from the plurality of icons in response to the first user input. For example, in the screen 720, the designated icon 217 may be designated depending on a user input 755.

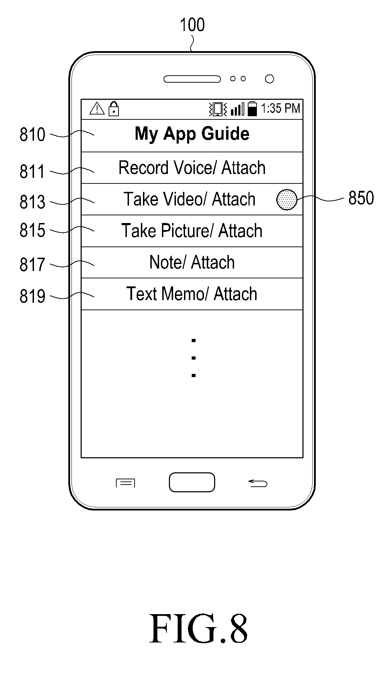

In block 420, the electronic device 100 may display a menu including at least one type of content to be provided as the guide for the designated icon. For example, a screen 810 in FIG. 8 may be an example of a guide setting menu for designating the type of content to be provided as a guide, selecting use/nonuse of a content creation application, or attaching the content matching the selected type. The guide setting menu on the screen 810 may include a Record Voice/Attach item 811, a Take Video/Attach item 813, a Take Picture/Attach item 815, a Note/Attach item 817, a Text Memo/Attach item 819, and the like.

The Record Voice/Attach item 811 may correspond to a function of driving or executing a voice recorder application for creating voice content, or selecting a voice file. The Take Video/Attach item 813 may correspond to a function of driving a camcorder (or video recorder) application for creating video content, or selecting a video file. The Take Picture/Attach item 815 may correspond to a function of driving a camera application for creating image content, or selecting an image file. The Note/Attach item 817 may correspond to a function of driving a note application for creating note content, or selecting a note file. The Text Memo/Attach item 819 may correspond to a function of driving a text application for creating text content, or selecting a text file.

In block 425, the electronic device 100 may determine whether content to be provided as a guide is created in response to user input.

If it is determined that content is not created (for example, attaching the content to be provided as a guide is designated depending on the user input), the electronic device 100 may select content corresponding to the type designated through the menu, in block 430. For example, in the screen 810 in FIG. 8, if the Take Video/Attach item 813 is selected depending on the user input 850, and attachment of video is designated, the electronic device 100 may provide the user with a UI for scanning or selecting videos or video files. The content provided as a guide may be provided by the manufacturer of the electronic device 100, or may include the default content that is provided when applications are downloaded or installed in the electronic device 100. For the default content, its playback may be deactivated, the default content may be edited, its association to an icon may be modified, or the default content may be changed to other content, in the electronic device 100 depending on the user's manipulations through guide setting.

If it is determined that content is created (for example, creating the content to be provided as a guide is designated depending on the user input), the electronic device 100 may execute a content creation application for acquiring content corresponding to the type designated through the menu, in block 435. For example, in the screen 810 in FIG. 8, if the Take Video/Attach item 813 is selected depending on the user input 850 and Take Video is designated, the electronic device 100 may execute a camcorder application.

In block 440, the electronic device 100 may acquire content through the content creation application by detecting a user input. For example, the electronic device 100 may acquire and store a video file through the camcorder application by detecting a user input.

In block 445, the electronic device 100 may set a guide by associating the content selected in block 430 or the content acquired in block 435, with the designated icon. For example, as illustrated in FIG. 4, the electronic device 100 may set a guide by storing associations between the designated icon and the content. The associations may be predetermined between at least one icon and content to be provided as a guide for the at least one icon, and stored in the electronic device 100, as the associations provided by the manufacturer of the electronic device 100, or as applications installed in the electronic device 100. For example, the associations may include associations between an icon for a native application provided by the manufacturer of the electronic device 100 or the communication service provider, and the default content. For the predetermined associations, at least some of the associations may be modified or changed, or activation/deactivation of a guide for each icon may be designated, in the electronic device 100 depending on the user input through the UI described in blocks 415 to 440.

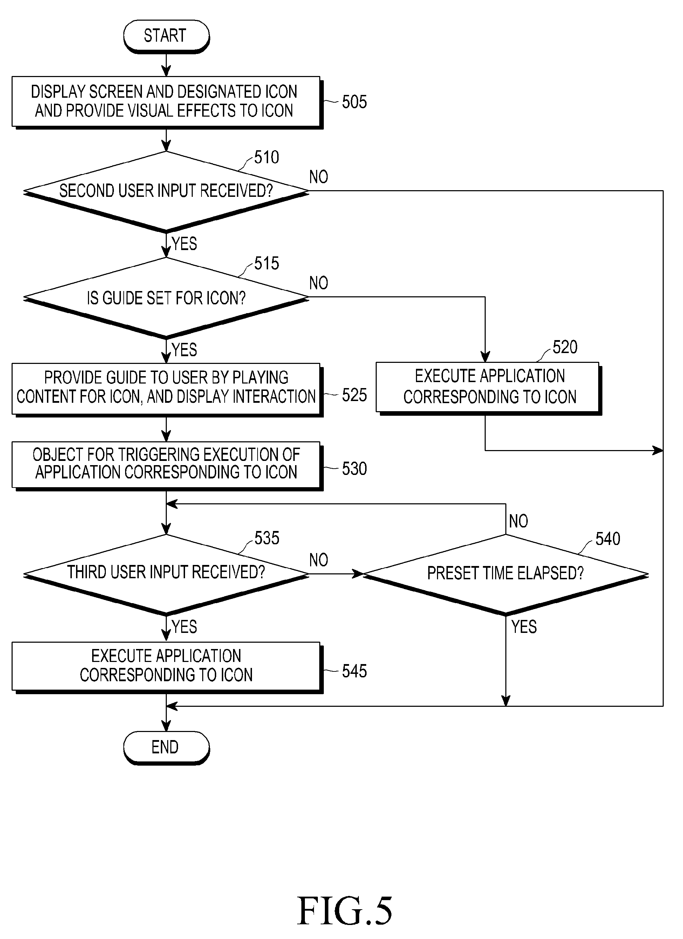

FIG. 5 is a flowchart illustrating a method of providing a guide according to one aspect of the present disclosure. FIG. 5 showing a detailed description of blocks 315 to 325 in FIG. 3 will be described below with reference to FIGs. 9 to 11.

In block 505, the electronic device 100 may display a screen and the designated icon for which a guide is set. The electronic device 100 may provide visual effects to the designated icon. The term 'after the guide setting mode' may refer to the state in which the electronic device 100 has set the guide, or the state in which the electronic device 100 has entered the normal use mode after exiting the guide setting mode.

For example, the screen 210 in FIG. 9 may be an example of displaying a home screen after the guide setting mode. The screen 210 may include the designated icon 217 for which a guide is set. The visual effects 219 may be provided to the designated icon 217. The visual effects 219 may include aura effects for the designated icon 217; animation; an alteration in the size of the designated icon different from that of undesignated icons; text; image; additional icons; or the like.

In block 510, the electronic device 100 may determine whether the second user input to the icon is received or not. The electronic device 100 may end the operation of providing a guide according to one aspect, if there is no user input to the icon, or if the second user input is different from a preset gesture or signal.

Upon receiving the second user input to the designated icon, the electronic device 100 may determine in block 515 whether a guide is set for the designated icon. For example, based on the associations stored in the memory, the electronic device 100 may determine whether a guide is set for the designated icon corresponding to the second user input.

If a guide is not set for the icon, the electronic device 100 may execute an application corresponding to a relevant icon in block 520, or end the operation of providing a guide.

If a guide is set for the icon, the electronic device 100 may provide a guide to the user by playing the content for the icon in block 525. For example, in the screen 210 in FIG. 9, if the designated icon 217 is designated through user input 250, the electronic device 100 may play video content 923 for the designated icon 217 on a screen 920. In addition, the electronic device 100 may display the interaction object 925 for triggering execution of an application corresponding to the icon.

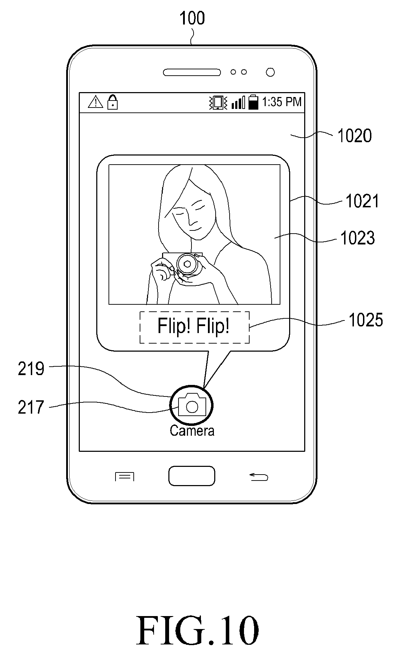

In order to display the guide on the home screen like the screen 210 of FIG. 9, the electronic device 100 may display the guide for the icon in the form of a pop-up 921 like on the screen 920, on the layer where the layout of icons of the screen 210 is maintained. The guide for the icon may be displayed not only in the form of the pop-up 921 on the screen 920, but also in the new form as the icons are rearranged or the home screen is changed like in a screen 1020 in FIG. 10. Content 1023 and 1025 may be displayed in the form of pop-up 1021 on the screen 1020, or may be displayed in the entire area or some areas regardless of the form of a pop-up. The screen 1020 shows that video content 1023 and text content 1025 may be displayed as a guide simultaneously as the content 1023 and 1025. Content in the form of voice, image or text may be provided together with the content 1023 and 1025. In this way, a plurality of content may be provided as a guide. Unlike in the screen 920, the interaction object 925 may be omitted from the guide on the screen 1020.

In the case where there is no interaction object 925 in the screen 1020 to which a guide is provided, after providing the guide is completed, the electronic device 100 may provide a UI for allowing the user to execute an application corresponding to the designated icon 217, by displaying the designated icon 217 on a screen 1110 in FIG. 11. In this case, the screen may have the same format as the screen 210 in FIG. 9, and like the designated icon 217 displayed on the screen 1110, the designated icon 217 may be displayed together with the visual effects 1119 indicating that the guide for the designated icon 217 has been provided. For example, the visual effects 219 in the screen 210 of FIG. 9 may be displayed to be different from the visual effects 1119 in the screen 1110 of FIG. 11 in terms of color, size, animation and the like. Auditory effects or the tactile effects may be provided to the icon in different ways depending on whether the guide has been provided.

After content is played as a guide, the electronic device 100 may drive or start a timer to control a UI for executing an application corresponding to the icon depending on the third user input, in block 530.

In block 535, the electronic device 100 may determine whether the third user input to the icon is received. If the third user input is not received, the electronic device 100 may determine in block 540 whether a preset time has elapsed after the timer is driven. If the preset time has not elapsed, the electronic device 100 may check again in block 535 whether the third user input is received. If the preset time has elapsed, the electronic device 100 may end the operation of executing an application corresponding to the designated icon 217. If the preset time has elapsed after the content is played as a guide, the electronic device 100 may display again a UI for providing a guide for the designated icon 217, like in the screen 210 of FIG. 9.

Upon receiving the third user input to the icon, the electronic device 100 may execute an application corresponding to the icon in block 545. For example, if the third user input to the interaction object 925 is received in the screen 920 providing a guide, the electronic device 100 may display a screen 1120 by executing an application corresponding to the designated icon 217. If the third user input 1150 to the designated icon 217 is received in the screen 1110 after the guide is provided (for example, after content is played as a guide), the electronic device 100 may display the screen 1120 by controlling to execute an application corresponding to the designated icon 217.

Although a UI for operating different functions corresponding to the different inputs has been described by distinguishing between the second user input and the third user input in the time axis with reference to FIG. 5, it should be noted that as described in conjunction with FIG. 1, the electronic device 100 may separately associate the second user input and the third user input with different gestures, and distinguish between the second user input and the third user input depending on the input type regardless of the input time. For example, the second user input may be associated with a hover gesture on the touch screen, and the third user input may be associated with a touch gesture on the touch screen.

As for the operation steps described as the guide providing method in conjunction with FIG. 4 or 5, their order may be arbitrarily changed, or some of the operation steps may be omitted. For these operation steps, some of the above-described examples may be implemented in combination. It will be apparent to those of ordinary skill in the art that the UIs described in connection with FIGs. 6 to 11 may be transformed into various forms by changing or omitting the operation steps.

It will be apparent to those of ordinary skill in the art that the example program described with reference to FIGs. 3 to 5 may be configured by software, hardware, or a combination thereof. The example program described in conjunction with FIGs. 3 to 5 may be recorded in a recording medium, and may be downloaded in the electronic device from a server or a computer over the communication network.

As is apparent from the foregoing description, content to be provided as a guide may be associated with an icon or a menu, allowing the user to more intuitively and conveniently receive the guide.

In a guide setting mode, the electronic device may set a guide by associating a designated icon with content to be provided as a guide, thereby allowing the user to efficiently select needed guide target and content.

The electronic device may use, as a guide, the content that is acquired through a content creation application depending on the user's manipulations, or that which is designated by the user, thereby providing the guide that coincides with the user's interests.
The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain examples, it will be understood by those skilled in the art that various changes in form and details may be made therein without departing from the scope of the invention as defined by the appended claims and their equivalents.

## Claims

1. A method comprising:
designating (305) an icon in response to a first user input;
setting (310) a guide by associating the designated icon with content to be provided as the guide for the designated icon;
displaying (315) a screen and the designated icon; and
playing (325) the content associated with the designated icon on the displayed screen in response to a second user input to the designated icon.

2. The method of claim 1, further comprising:
executing an application corresponding to the designated icon in response to a third user input.

3. The method of claim 2, wherein the second user input and the third user input correspond to different touch gestures.

4. The method of claim 2 or 3, further comprising identifying a hover gesture on a touch screen as the second user input; and identifying a touch gesture on the touch screen as the third user input.

5. The method of any one of the preceding claims, wherein playing the content further comprises displaying an interaction object (925) for triggering execution of an application corresponding to the designated icon.

6. The method of claim 5, further comprising: upon receiving a third user input to the interaction object (925), executing the application.

7. The method of any one of the preceding claims, wherein setting the guide further comprises:
displaying (410) a plurality of icons in at least one of a home screen and a program screen ; and
designating (415) the icon from the plurality of icons in response to the first user input.

8. The method of claim 7, wherein setting the guide further comprises:
displaying (420) a menu comprising at least one type of content to be provided as the guide for the designated icon; and
associating the designated icon with the content corresponding to a type selected through the menu.

9. The method of claim 8, wherein setting the guide further comprises:
executing (435) a content creation application for acquiring the content corresponding to the selected type; and
acquiring (440) the content through the content creation application in response to manipulations input by a user.

10. The method of claim 1, wherein the content is acquired through the content creation application in the electronic device depending on user's manipulations.

11. The method of any one of the preceding claims, wherein displaying the screen further comprises providing (505) the screen with visual effects indicating that the guide is set for the designated icon.

12. The method of any one of the preceding claims, wherein the content includes at least one of voice, image, video, and text.

13. The method of any one of the preceding claims, wherein playing the content further comprises displaying the content in a form of a pop-up in some areas of the screen.

14. The method of any one of the preceding claims, wherein setting the guide further comprises:
maintaining, in a memory, predetermined associations between at least one icon and content to be provided as the guide for the at least one icon; and
changing the predetermined associations in response to user input.

15. An electronic device (100) comprising:
a User Interface, UI, unit (135) configured to designate an icon in response to a first user input so as to place the electronic device in a guide setting mode and to display a screen and the designated icon; and
a controller (150) configured to set a guide by associating the designated icon with content to be provided as the guide for the designated icon and to play the content associated with the designated icon in the screen in response to a second user input to the designated icon.

16. Computer program product comprising computer instructions which, when executed on a processor of an electronic device (100) cause said device to behave according to the method of any one of the claims 1-14.
